# EUROPÄISCHE PATENTSCHRIFT

(11) **EP 3 811 780 B1**
(45) Veröffentlichungstag und Bekanntmachung des Hinweises auf die Patenterteilung: **03.12.2025**
(21) Anmeldenummer: 20203111.8
(22) Anmeldetag: 21.10.2020
(51) Int. Cl.: A01N 31/04, A01N 31/14, A01N 43/80, A01P 1/00

(54) **VERFAHREN ZUM ABLÖSEN VON BIOFILMEN**
METHOD FOR REMOVING BIOFILMS
PROCÉDÉ DE SÉPARATION DE BIOFILMS

(30) Priorität: 22.10.2019 DE 102019128548
(43) Veröffentlichungstag der Anmeldung: 28.04.2021
(73) Patentinhaber: Vink Chemicals GmbH & Co. KG, 21255 Kakenstorf (DE)
(72) Erfinder: HOLSTEN, Lea, 21255 Kakenstorf (DE); GÜCKEL, Anne, 21255 Kakenstorf (DE); RIEDERLE, Petra, 21255 Kakenstorf (DE); SAKULOWSKI, Stefan, 21255 Kakenstorf (DE)
(74) Vertreter: LKGLOBAL Lorenz & Kopf Patentanwalt Attorney at Law PartG mbB

(56) Entgegenhaltungen:
- EP-A1- 3 398 436
- .: "parmetol BPX", SICHERHEITSDATENBLATT, 6 July 2016 (2016-07-06), Germany, pages 1 - 14, XP055782943, Retrieved from the Internet <URL:https://www.handwerker-versand.de/images/datenblaetter/parmetol %20BPX%20ZSDB_P_DE%20DE.pdf> [retrieved on 20210308]
- .: "parmetol MBX: Fast-acting preservative with long-term protection", 1 April 2016 (2016-04-01), Germany, pages 1 - 8, XP055783128, Retrieved from the Internet <URL:https://www.julius-hoesch.de/wp-content/uploads/2016/06/parmetol_MBX_GB-2.pdf> [retrieved on 20210308]
- WALKER J T ET AL: "Microbiological Evaluation of a Range of Disinfectant Products To Control Mixed-Species Biofilm Contamination in a Laboratory Model of a Dental Unit Water System", vol. 69, 1 June 2003 (2003-06-01), pages 3327 - 3332, XP055782948, Retrieved from the Internet <URL:https://www.ncbi.nlm.nih.gov/pmc/articles/PMC161510/pdf/1922.pdf> DOI: 10.1128/AEM.69.6.3327-3332.2003
- NORTHERN WILLIAM ISAAC: "Discovery of New Antimicrobial Agents using Combinatorial Chemistry", THESIS, 1 January 2007 (2007-01-01), U.S.A., pages 1 - 87, XP093024537, Retrieved from the Internet <URL:https://corescholar.libraries.wright.edu/cgi/viewcontent.cgi?article=1345&context=etd_all> [retrieved on 20230216]

## Beschreibung

### GEBIET DER ERFINDUNG

Die vorliegende Erfindung betrifft die nicht-therapeutische Verwendung einer technischen Zusammensetzung umfassend mindestens eines von Phenoxyethanol, Benzylalkohol, Phenoxypropanol und Phenethylalkohol, mindestens eines von 1,2-Benzisothiazolin-3-on und dessen Derivaten, und ein organisches Amin mit einer Alkylgruppe mit mindestens 8 Kohlenstoffatomen zum Ablösen von Biofilmen sowie ein nicht-therapeutisches Verfahren zum Ablösen von Biofilmen, umfassend das Behandeln eines mit einem Biofilm belegten Substratums mit einer solchen technischen Zusammensetzung.

### HINTERGRUND

In vielen wässrigen Systemen kann es an den wässrigen Grenzflächen zur Bildung von Biofilmen kommen. Ein Biofilm besteht dabei aus einer sich glitschig-weich anfühlenden, wasserhaltigen Schleimschicht, in der Mikroorganismen aller Art, beispielsweise Pilze, Algen, Bakterien, Hefen und Protozoen, eingebettet sind. Als Biofilm werden im erweiterten Sinn alle Aggregate von Mikroorganismen bezeichnet, die in eine von ihnen gebildete Schleimschicht eingebettet sind.

Ein Biofilm bildet sich dann aus, wenn sich Mikroorganismen an den wässrigen Grenzflächen ansiedeln können. Prinzipiell können sich Biofilme an allen Flächen entwickeln. Die Grenzfläche, auf der sich der Biofilm bildet, oder genauer gesagt die Phase, in die der Biofilm nicht oder kaum hineinwächst, bildet das Substratum.

Die Biofilmproblematik tritt daher überall dort auf, wo es zur Ausbildung wässriger Grenzflächen kommt. Diese Grenzflächen befinden sich zwischen Flüssig- und Gasphase sowie zwischen Flüssig- und Festphase. Betroffen sind im technischen Bereich beispielsweise Produktionsanlagen, Kühlschmierstoffsysteme für die Metallbearbeitung, Waschmaschinen, Reinigungsautomaten und Autowaschanlagen.

Die Ausbildung von Biofilmen beispielsweise in Rohren oder sonstigen von wässrigen Strömen durchflossenen Leitungen ist unerwünscht, da sich dadurch zum einen der Querschnitt des durchflossenen Rohrs oder der Leitung wesentlich verengen kann bis hin zur vollständigen Verstopfung des Rohrs oder der Leitung und zum anderen durch die Biofilme eine ungewollte Kontamination der wässrigen Ströme und damit auch eines Fertigprodukts beispielsweise mit Pilzsporen und Mikroorganismen erfolgen kann. Weiterhin kann ein Biofilm zu einer mikrobiologisch induzierten Korrosion des Substratums, beispielsweise eines Metallrohrs, oder zu einer Veränderung der Materialeigenschaften des Substratums, zum Verstopfen von Filtern, zur Geruchsbildung und zu vielen anderen unerwünschten Effekten führen. Nicht zuletzt führt die Anwesenheit von Biofilmen in Rohren und Leitungen aufgrund der dadurch induzierten turbulenten Strömung zu einem erhöhten Energiebedarf der Pumpen, die zum Befördern der wässrigen Ströme benötigt werden. Ein ausgebildeter Biofilm kann folglich schwerwiegende Folgen in der technischen Produktion haben und es ist wünschenswert, die Bildung eines Biofilms zum einen komplett zu unterdrücken und zum anderen, im Falle, dass sich bereits ein Biofilm ausgebildet hat, diesen effektiv und vollständig zu entfernen.

Auch wenn mit dem heutzutage häufig vorgenommenen Einsatz von Bioziden in Prozessströmen der Bildung von Biofilmen recht zuverlässig vorgebeugt werden kann, ist es jedoch nicht ausgeschlossen, dass sich ein Biofilm auch trotz des Einsatzes von bioziden Wirkstoffen bilden kann. Zusätzlich wird die Ablösung eines bereits vorhandenen Biofilms nicht durch den Einsatz von marktüblichen Bioziden eingeleitet. Mit anderen Worten korreliert die Fähigkeit eines marktüblichen Biozids die Bildung eines Biofilms zu verhindern nicht mit der bioziden Wirksamkeit des eingesetzten Biozids gegenüber einem bereits gebildeten Biofilm. Ist der Biofilm erst einmal ausgebildet, kann er folglich mit den herkömmlichen Biozidprodukten, wenn überhaupt, nur sehr schwer entfernt und auch ein bereits abgelöster Biofilm nur sehr schlecht abgetötet werden. In vielen Fällen müssen daher zur Entfernung eines Biofilms äußerst aufwändige Systemreinigungen durchgeführt und zum Teil sogar Anlagen(teile) demontiert und manuell gereinigt werden. Bei schwer zugänglichen Anlagenteilen ist eine manuelle Reinigung meist auch überhaupt nicht möglich, so dass diese Teile vollständig ausgetauscht werden müssen.

Zum Ablösen von Biofilmen gibt es im Stand der Technik bisher verschiedene technische Lösungen. Zum einen werden bisher hochalkalische Systemreiniger auf Basis von Formaldehyd verwendet. Diese haben allerdings den Nachteil, dass sie als krebserregend eingestuft werden. Durch die Reklassifizierung von Formaldehyd als krebserregend ist der Umgang und die Verwendung in der Produktion nicht mehr so einfach wie früher. In Deutschland fallen solche Produkte unter die Chemikalienverbotsverordnung und dürfen nur von einer entsprechenden sachkundigen Person verwendet werden. Zudem müssen die Grenzwerte für Formaldehyd während der Systemreinigung überwacht und gegebenenfalls Schutzmaßnahmen getroffen werden. Weiterhin wird empfohlen, die Anwendung mindestens sechs Stunden durchzuführen, um ein ausreichendes biozides Ergebnis inklusive Biofilmablösung in der zu reinigenden Anlage zu erzielen. In dieser Zeit kann die Anlage nicht für die Produktion von beispielsweise Farben und Waschmitteln verwendet werden. Des Weiteren können hochalkalische Reiniger nicht in allen Anlagen verwendet werden. Anlagen, in denen Teile aus Aluminium verbaut worden sind, sind für den Einsatz nicht geeignet, da diese Teile durch den hohen pH-Wert der Reinigungszusammensetzung angegriffen werden.

Die alternativ angebotenen formaldehydfreien Systemreiniger benötigen zum einen sehr hohe Einsatzkonzentration bei meist wesentlich schlechterer Ablösungsleistung insbesondere im Vergleich zu formaldehydhaltigen Systemreinigern.

Die Verwendung von konventionellen Bioziden, wie beispielsweise Chlormethylisothiazolinon/Methylisothiazolinon (CMIT/MIT) und Formaldeyd-Depots, ermöglicht keine ausreichende Ablösung von Biofilmen. Zusätzlich wurde auch MIT kürzlich reklassifiziert, was seine Einsatzmöglichkeiten einschränkt. Auch die derzeit im Markt häufig zur Konservierung beispielsweise von Farben und Waschmitteln eingesetzte Mischung aus MIT und BIT ist nicht in der Lage, Biofilme zu lösen oder abzutöten, sondern kann nur zum Zwecke der Konservierung während der Lagerung verwendet werden. Für technische Anwendungen müssen daher zusätzliche Produkte zur Biofilmablösung eingesetzt werden, wodurch die Zeit-/Kosteneffizienz im Betrieb weiter reduziert wird.

Ein anderes im Markt bekanntes Konservierungsmittel ist parmetol BPX, das unter anderem in der EP 3398436 A1 beschrieben ist. Die Verwendung einer solchen nur als Konservierungsmittel beschriebenen Zusammensetzung zur Behandlung, geschweige denn zur effektiven und schnellen Ablösung von Biofilmen, ist darin jedoch nicht erwähnt oder nahegelegt.

Eine manuelle Reinigung der mit Biofilm belegten Anlagen schließlich erfordert, wenn denn überhaupt möglich, einen hohen Zeit- und Arbeitsaufwand. Insbesondere bei massivem Biofilmbefall ist die manuelle Reinigung aber meist die einzige Möglichkeit der Reinigung. Hierzu muss im Extremfall die komplette Anlage stillgelegt und auseinandergebaut werden, um den Biofilm mechanisch aus der Anlage zu entfernen. Dies führt gerade in der Automobilindustrie zu massiven wirtschaftlichen Verlusten, da in dieser Industrie die Anlagen im vollkontinuierlichen Betrieb eingesetzt werden.

Die EP 3398436 A1 beschreibt eine Konservierungszusammensetzung umfassend Phenoxyethanol, 2-Butyl-1,2-benzisothiazolin-3-on und N,N-bis(3-aminopropyl) dodecylamin. Ein kommerziell erhältliches Konservierungsmittel ist parmetol BPX, enthaltend 2-Phenoxyethanol, N-(3-Aminopropyl)-N-dodecylpropan-1,3-diamin und n-Butyl-1,2-benzisothiazolin-3-on.

J. T. Walker et al. beschreiben in dem Artikel "Microbiological Evaluation of a Range of Disinfectant Products To Control Mixed-Species Biofilm Contamination in a Laboratory Model of a Dental Unit Water System", Applied and Environmental Microbiology, Bd. 69, Seiten 3327-3332, Untersuchungen zur Dekontamination von Biofilm in einem Wassersystem einer Dentaleinheit.

Es besteht folglich ein ausgeprägter Bedarf an einem Verfahren, das die schnelle (idealerweise innerhalb weniger als einer Stunde) und vollständige Reinigung auch einer mit massivem Biofilm belegten Fläche, insbesondere in Rohren, Leitungen und Anlageteilen aller Art, durch Ablösung des Biofilms ermöglicht, wobei das Verfahren ohne die Verwendung von Formaldehyd auskommen sollte.

### BESCHREIBUNG

Gelöst wird diese Aufgabe durch die nicht-therapeutische Verwendung einer technischen Zusammensetzung umfassend
a) mindestens eines von Phenoxyethanol, Benzylalkohol, Phenoxypropanol und Phenethylalkohol,
b) mindestens eines von 1,2-Benzisothiazolin-3-on und dessen Derivaten gemäß Formel (I): 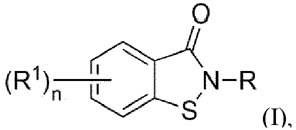 in der R gleich H oder C₁- bis C₁₀-Alkyl ist, R¹ gleich Hydroxy, Halogen, C₁- bis C₁₀-Alkyl oder C₁- bis C₁₀-Alkoxy ist und n gleich 0 bis 4 ist; und wenn mehrere Reste R¹ vorhanden sind, sie gleich oder verschieden sein können, und
c) ein organisches Amin mit einer Alkylgruppe mit mindestens 8 Kohlenstoffatomen zum Ablösen von Biofilmen,
wobei die Komponente c) ausgewählt ist aus N-Dodecylpropan-1,3-diamin und Aminen der Formel II 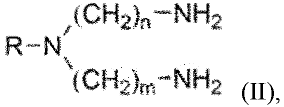 in der R ein geradkettiger oder verzweigtkettiger Alkyl- oder Alkylenrest mit 8 bis 22 Kohlenstoffatomen ist, und n + m = 2 bis 12.

Bevorzugte Ausführungsformen sind in der folgenden Beschreibung sowie den angefügten Ansprüchen beschrieben.

Es wurde überraschend gefunden, dass eine solche Zusammensetzung einen Biofilm innerhalb kurzer Zeit effektiv ablösen bzw. abtöten und zusätzlich die Wiederansiedlung eines neuen Biofilms zuverlässig inhibieren kann. Das Ablösen des Biofilms im Sinne der Erfindung ist bevorzugt ein vollständiges Ablösen des Biofilms. Ein vollständiges Ablösen des Biofilms ist beispielsweise dann erzielt, wenn eine gemäß ASTM E2799-12 hergestellte Probe mit einem Biofilm nach einem definierten Einwirkungszeitraum der Zusammensetzung, beispielsweise nach 10 Stunden, bevorzugt 5 Stunden, bevorzugter 2 Stunden, wie beispielsweise nach einer Stunde, und besonders bevorzugt nach einer halben Stunde eine optische Dichte (OD), gemessen bei 620 nm, von höchstens 0,1 aufweist, wobei alle anderen Experimentalbedingungen gemäß ASTM E2799-12 angewendet werden.

Die Fähigkeit der beschriebenen technischen Zusammensetzungen Biofilme abzulösen ist umso überraschender, als dass konventionelle Biozide, geschweige denn bloße Konservierungsmittel, in der Regel nicht in der Lage sind, einen Biofilm zu durchdringen und diesen vollständig abzutöten und/oder aufzulösen, sondern meist nur die oberste Schicht eines Biofilms angreifen können. Die in der erfindungsgemäßen Verwendung genutzte Zusammensetzung umfassend die drei Komponenten a), b) und c) ist folglich offensichtlich in der Lage, einen Biofilm unerwarteterweise effektiv zu durchdringen und diesen dadurch nicht nur von außen, sondern auch von innen, d.h. von allen Seiten, anzugreifen und in der Folge vom Substratum abzulösen. Eine solcher synergistische Wirkung der Komponenten zum Ablösen von Biofilmen war nicht vorhersehbar.

Bei der dauerhaften Zugabe einer Zusammensetzung umfassend die drei Komponenten a), b) und c) zu einem Prozessstrom (d.h. nicht nur in einer extra hergestellten und verwendeten Reinigungszusammensetzung) kann daher die Reinigung einer Anlage mit Systemreinigern aufgrund der einerseits kontinuierlichen Ablösung von Biofilmen und andererseits der Inhibition von Biofilmbildung durch die konservierenden Eigenschaften der Kombination vermieden oder zumindest die Häufigkeit einer solchen Reinigung wesentlich reduziert werden. Zudem können in manchen Anwendungen Standzeiten durch mikrobielle Kontamination von Biofilmen nach der Herstellung von Fertigprodukten, wie beispielsweise Waschmittel und Farben, vermieden werden. In manchen Anwendungen ermöglicht die Verwendung einer Zusammensetzung umfassend die drei Komponenten a), b) und c) eine längere Laufzeit der Kühlschmierstoffemulsion durch Vermeidung der Bildung von Biofilmen in den Anlagen. In manchen Anwendungen, beispielsweise in Waschmaschinen, ermöglicht die Verwendung einer Zusammensetzung eine Vermeidung von Geruchsbildung, so dass keine Notwendigkeit für die Zugabe weiterer desinfizierender Additive besteht.

Die erfindungsgemäß verwendete technischen Zusammensetzung umfasst als einen wesentlichen Bestandteil mindestens eines von Phenoxyethanol, Benzylalkohol, Phenoxypropanol und Phenethylalkohol. Bevorzugt umfasst die erfindungsgemäß verwendete technischen Zusammensetzung mindestens eines von Phenoxyethanol und Phenoxypropanol, weiter bevorzugt Phenoxyethanol oder Phenoxypropanol. Besonders bevorzugt umfasst die erfindungsgemäß verwendete technischen Zusammensetzung Phenoxyethanol. Phenoxyethanol ist ein Ether des Phenols mit Ethylenglycol.

Die erfindungsgemäß verwendete technischen Zusammensetzung umfasst als einen weiteren wesentlichen Bestandteil mindestens eines von 1,2-Benzisothiazolin-3-on und dessen Derivaten. 1,2-Benzisothiazolin-3-on und dessen Derivate werden durch die Formel (I): 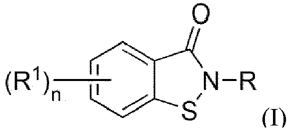 wiedergegeben, in der R gleich H oder C₁- bis C₁₀-Alkyl sein kann, R¹ gleich Hydroxy, Halogen (insbesondere Chlor), C₁- bis C₁₀-Alkyl oder C₁- bis C₁₀-Alkoxy sein kann und n gleich 0 bis 4 sein kann; wenn mehrere Reste R¹ vorhanden sind, dann können sie gleich oder verschieden sein. Derartige Verbindungen sind u.a. in der WO 01/92444 A1 offenbart. In einer bevorzugten Ausführungsform ist R ein Alkyl und besonders bevorzugt ein Butyl. Bevorzugte Derivate sind halogenfrei.

Bevorzugt ist die Komponente b) ein N-Alkyl-1,2-benzisothiazolin-3-on und besonders bevorzugt N-butyl-1,2-benzisothiazolin-3-on (d.h. n gleich 0 und R gleich Butyl). N-butyl-1,2-benzisothiazolin-3-on (BBIT) ist beispielsweise kommerziell erhältlich als Densil DN von Lonza.

Die erfindungsgemäß verwendete technischen Zusammensetzung umfasst als einen weiteren wesentlichen Bestandteil ein organisches Amin mit einer Alkylgruppe mit mindestens 8 Kohlenstoffatomen, wobei das organische Amin mit einer Alkylgruppe mit mindestens 8 Kohlenstoffatomen ausgewählt ist aus N-Dodecylpropan-1,3-diamin und Aminen der Formel II 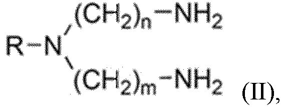 in der R ein geradkettiger oder verzweigtkettiger Alkyl- oder Alkylenrest mit 8 bis 22 Kohlenstoffatomen ist, und n + m = 2 bis 12.

Das als Komponente c) eingesetzte mindestens eine organische Amin besitzt eine Alkylgruppe mit mindestens 8 Kohlenstoffatomen. Diese Alkylgruppe kann ein endständiger (d. h. Alkyl)-oder brückenständiger (d. h. Alkylen)-Rest sein.

Beispiele für erfindungsgemäße organische Amine mit einer Alkylgruppe mit mindestens 8 Kohlenstoffatomen sind die in der DE 40 33 272 C1 genannten organischen Amine der Formel II.

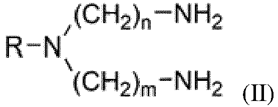

In der Formel II bedeutet R einen geradkettigen oder verzweigtkettigen Alkyl- oder Alkylenrest mit 8 bis 22 Kohlenstoffatomen, und n + m = 2 bis 12. Vorzugsweise ist n + m = 3 bis 10, wie beispielsweise 4 bis 8, insbesondere sind n = m = 3. Die organischen Amine gemäß der Formel II sind C₆- bis C₂₂- und vorzugsweise C₁₀- bis C₁₄-geradkettige oder verzweigtkettige Alkyl-oder Alkylenamine, wie beispielsweise Derivate von Fettaminen R-NH₂, in denen R ein Kokosfettalkyl- (C₈ bis C₁₈-, vorwiegend C₁₂- bis C₁₄-Alkyl)-, ein Oleyl- (überwiegend C₁₈-Alkenyl)-, ein Stearyl- (C₁₆-Alkyl) oder ein Talgfettalkyl-Rest (C₁₆- bis C₁₈-Alkyl oder Alkenyl) bedeutet.

Besonders bevorzugt ist das Amin ausgewählt aus N-Dodecylpropan-1,3-diamin und N,N-Bis(3-aminopropyl)dodecylamin (beispielsweise erhältlich als Lonzabac^{®} 12 von Lonza oder als Triameen Y12D von Nouryon). Insbesondere bevorzugt ist N,N-Bis(3-aminopropyl)dodecylamin.

Es können auch Aminsalze eingesetzt werden.

Beispielsweise umfasst eine erfindungsgemäß zum Ablösen von Biofilmen verwendete technische Zusammensetzung somit
a) mindestens eines von Phenoxyethanol, Benzylalkohol, Phenoxypropanol und Phenethylalkohol,
b) N-Alkyl-1,2-Benzisothiazolin-3-on, und
c) ein organisches Amin ausgewählt aus N-Dodecylpropan-1,3-diamin und N,N-Bis(3-aminopropyl)dodecylamin.

Eine erfindungsgemäß bevorzugt zum Ablösen von Biofilmen verwendete technische Zusammensetzung umfasst
a) mindestens eines von Phenoxyethanol, Benzylalkohol, Phenoxypropanol und Phenethylalkohol,
b) N-Butyl-1,2-Benzisothiazolin-3-on, und
c) N,N-Bis(3-aminopropyl)dodecylamin.

Eine erfindungsgemäß noch bevorzugter zum Ablösen von Biofilmen verwendete technische Zusammensetzung umfasst
a) Phenoxyethanol,
b) N-Alkyl-1,2-Benzisothiazolin-3-on, und
c) N,N-Bis(3-aminopropyl)dodecylamin.

Eine erfindungsgemäß besonders bevorzugt zum Ablösen von Biofilmen verwendete technische Zusammensetzung umfasst
a) Phenoxyethanol,
b) N- Butyl -1,2-Benzisothiazolin-3-on, und
c) N,N-Bis(3-aminopropyl)dodecylamin.

In der erfindungsgemäß verwendeten Zusammensetzung kann das Gewichtsverhältnis von Komponente b) zu Komponente a) (b/a) größer oder gleich (≥) 10⁻³ und kleiner oder gleich (≤) 10⁻¹ sein, und das Gewichtsverhältnis von Komponente c) zu Komponente a) (c/a) größer oder gleich 5 × 10⁻⁴ und kleiner oder gleich 6 × 10⁻² sein.

Bevorzugt ist in der erfindungsgemäß verwendeten Zusammensetzung das Gewichtsverhältnis (b/a) größer oder gleich 5 × 10⁻³ und kleiner oder gleich 5 × 10⁻² und das Gewichtsverhältnis (c/a) größer oder gleich 10⁻³ und kleiner oder gleich 10⁻².

Besonders bevorzugt ist in der erfindungsgemäß verwendeten Zusammensetzung das Gewichtsverhältnis (b/a) größer oder gleich 8 × 10⁻³ und kleiner oder gleich 1,5 × 10⁻² und das Gewichtsverhältnis (c/a) größer oder gleich 2,5 × 10⁻³ und kleiner oder gleich 6 × 10⁻³.

Bei der Berechnung der Mengen der Komponenten b) und c) gemäß der vorliegenden Beschreibung der Erfindung ist zu berücksichtigen, dass beispielsweise 1,2-Benzisothiazolin-3-on und seine Derivate und/oder auch das Amin c) als Salz(e) zu der Zusammensetzung formuliert werden können. Beispiele für Salze von 1,2-Benzisothiazolin-3-on und seinen Derivaten sind Alkali-, Erdalkali- und Aminsalze oder quartäre Ammoniumsalze, wie Na-, K-, Li-, Ca-, Mg-, Ammonium-, 2-Hydroxyethylammonium- und Triethylammonium-Salze und Gemische davon. Weitere Beispiele für derartige Salze sind substöchiometrische Kombinationen aus 1,2-Benzisothiazolin-3-on bzw. seinen Derivaten und Alkalisierungsmitteln (die mit 1,2-Benzisothiazolin-3-on bzw. seinen Derivaten zu den entsprechenden Salzen umgesetzt werden). Ebenso kann das organische Amin als Salz mit einem anionischen Gegenion, wie beispielsweise einem Halogenid wie Chlorid, vorliegen. Bevorzugt ist allerdings, dass weder Komponente b) noch Komponente c) als Salze zu der Zusammensetzung formuliert werden.

Bei der Berechnung der Menge von Komponente b) in der Zubereitung wird die Menge an gegebenenfalls vorhandenen Gegenionen nicht berücksichtigt, d.h. Komponente b) wird bei der Mengenberechnung so behandelt, als ob es nicht als Salz vorliegt. Dies wird der Tatsache gerecht, dass gemäß der erfindungsgemäßen Verwendung Komponente b) üblicherweise als 1,2-Benzisothiazolin-3-on oder Derivat davon und nicht als deren Salz zugesetzt wird.

Ebenso erfolgt, wenn das organische Amin als Salz vorliegt, die Angabe der Menge der Komponente c) in Bezug auf das organische Amin ohne Berücksichtigung der Salzbildung.

Die erfindungsgemäß verwendete technische Zusammensetzung kann die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-% und besonders bevorzugt von 0,10 bis 1,50 Gew.-%, bezogen auf das Gesamtgewicht der technischen Zusammensetzung, enthalten.

Beispielsweise umfasst eine erfindungsgemäß zum Ablösen von Biofilmen verwendete technische Zusammensetzung somit
a) mindestens eines von Phenoxyethanol, Benzylalkohol, Phenoxypropanol und Phenethylalkohol,
b) N-Alkyl-1,2-Benzisothiazolin-3-on, und
c) ein organisches Amin ausgewählt aus N-Dodecylpropan-1,3-diamin und N,N-Bis(3-aminopropyl)dodecylamin,
wobei die Zusammensetzung die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-% und besonders bevorzugt von 0,10 bis 1,50 Gew.-%, bezogen auf das Gesamtgewicht der technischen Zusammensetzung, umfasst.

Eine erfindungsgemäß bevorzugt zum Ablösen von Biofilmen verwendete technische Zusammensetzung umfasst
a) mindestens eines von Phenoxyethanol, Benzylalkohol, Phenoxypropanol und Phenethylalkohol,
b) N-Butyl-1,2-Benzisothiazolin-3-on, und
c) N,N-Bis(3-aminopropyl)dodecylamin,
wobei die Zusammensetzung die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-% und besonders bevorzugt von 0,10 bis 1,50 Gew.-%, bezogen auf das Gesamtgewicht der technischen Zusammensetzung, umfasst.

Eine erfindungsgemäß noch bevorzugter zum Ablösen von Biofilmen verwendete technische Zusammensetzung umfasst
a) Phenoxyethanol,
b) N-Alkyl-1,2-Benzisothiazolin-3-on, und
c) N,N-Bis(3-aminopropyl)dodecylamin,
wobei die Zusammensetzung die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-% und besonders bevorzugt von 0,10 bis 1,50 Gew.-%, bezogen auf das Gesamtgewicht der technischen Zusammensetzung, umfasst.

Eine erfindungsgemäß besonders bevorzugt zum Ablösen von Biofilmen verwendete technische Zusammensetzung umfasst
a) Phenoxyethanol,
b) N- Butyl -1,2-Benzisothiazolin-3-on, und
c) N,N-Bis(3-aminopropyl)dodecylamin,
wobei die Zusammensetzung die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-% und besonders bevorzugt von 0,10 bis 1,50 Gew.-%, bezogen auf das Gesamtgewicht der technischen Zusammensetzung, umfasst.

In der erfindungsgemäß verwendeten technischen Zusammensetzung kann die Menge an Komponente a), ausgedrückt in Gewichtsprozent der Zusammensetzung, 0,00935% bis 9,94%, bevorzugt 0,00935% bis 4,97%, bevorzugter 0,0935% bis 1,988% und noch bevorzugter 0,0935% bis 1,491%, wie beispielsweise 0,935% bis 0,994% und besonders bevorzugt 0,9775% bis 0,99%, betragen.

In der erfindungsgemäß verwendeten technischen Zusammensetzung kann die Menge an Komponente b), ausgedrückt in Gewichtsprozent der Zusammensetzung, 0,00005% bis 0,5%, bevorzugt 0,00005% bis 0,25%, bevorzugter 0,0005% bis 0,1%, noch bevorzugter 0,005% bis 0,075%, wie beispielsweise 0,005% bis 0,05% und besonders bevorzugt 0,0075% bis 0,0125%, betragen.

In der erfindungsgemäß verwendeten technischen Zusammensetzung kann die Menge an Komponente c), ausgedrückt in Gewichtsprozent der Zusammensetzung, 0,00001% bis 0,15%, bevorzugt 0,00001% bis 0,075%, bevorzugter 0,0001% bis 0,03%, noch bevorzugter 0,0001% bis 0,0225%, wie beispielsweise 0,001% bis 0,015% und besonders bevorzugt 0,0025% bis 0,010%, betragen.

Die erfindungsgemäß verwendete technische Zusammensetzung ist in der Lage, zumindest eine teilweise Ablösung eines Biofilms von einem Substratum zu bewirken. Die Zusammensetzung kann insbesondere in der Lage sein, nach einer halben Stunde Einwirkzeit eine Ablösung eines Biofilms zu erzielen, gemessen nach ASTM E2799-12. Gemäß der ASTM E2799-12 wird die Effektivität eines Desinfektionsmittels gegenüber einem standardisierten Biofilm aus Pseudomonas aeruginosa unter Verwendung eines MBEC (minimum biofilm eradication concentration; minimale Konzentration zur Biofilmbeseitigung) Assays gemessen. Die ASTM E2799-12 und die darin beschriebene Vorgehensweise ist dem Fachmann wohlbekannt.

Eine erfindungsgemäß verwendete technische Zusammensetzung kann beispielsweise hergestellt werden durch Zugabe des kommerziell erhältlichen Produkts Parmetol^{®} BPX, bestehend aus Phenoxyethanol, Butylbenzisothiazolinon (BBIT) und N-(3-Aminopropyl) -N-dodecylpropane-1,3-diamine (BDA) zu einer wässrigen Zusammensetzung in den benötigten Mengen, beispielsweise in einer Menge von 0,01 bis 10,00 Gew.-%, bevorzugt von 0,01 bis 5,00 Gew.-%, bevorzugter von 0,01 bis 2,00 Gew.-%, besonders bevorzugt von 0,10 bis 1,50 Gew.-%, bezogen auf das Gesamtgewicht der technischen Zusammensetzung. Parmetol^{®} BPX enthält zwischen 93,5 und 99,4 % Phenoxyethanol, zwischen 0,5 und 5 % BBIT und zwischen 0,1 und 1,5 % BDA.

Die erfindungsgemäß verwendete technische Zusammensetzung kann zusätzlich gegebenenfalls d) Wasser, e) Lösungsmittel und/oder f) weitere mikrobizide Wirkstoffe, funktionelle Additive oder Hilfsstoffe enthalten.

Vorzugsweise ist in der erfindungsgemäß verwendeten technische Zusammensetzung d) Wasser in einer Menge von mindestens 95 Gew.-%, bevorzugter mindestens 97 Gew.-%, insbesondere mindestens 98 Gew.-%, wie beispielsweise mindestens 99 Gew.-% enthalten. Dabei sind technische Zusammensetzungen bevorzugt, die diese Mengen d) Wasser enthalten und frei von c) Stabilisator, e) Lösungsmittel und f) weiteren mikrobiziden Wirkstoffen, funktionellen Additiven oder Hilfsstoffen sind.

Als e) Lösungsmittel sind geeignet: Alkohole wie beispielsweise Ethanol, Propanole, Glykole wie beispielsweise Ethylenglykol, Propylenglykole wie Dipropylenglykol, Glykolether wie Butylglykol, Butyldiglykol, und Alkylglycerinether sowie Gemische derselben. Bevorzugt werden VOC (volatile organic compounds, flüchtige organische Verbindungen)-freie oder VOCarme Lösungsmittel verwendet.

Die Konzentration der Komponente e) in der technischen Zusammensetzung beträgt vorzugsweise höchstens 5 Gew.-%, bevorzugter höchstens 2 Gew.-%, insbesondere höchstens 0,5 Gew.-%, wie beispielsweise höchstens 0,2 Gew.-%. Besonders bevorzugte erfindungsgemäße Gebrauchslösungen sind frei von e) Lösungsmittel.

Als f) weitere mikrobizide Wirkstoffe sind Biozide der Biozid-Richtlinie (Biocidal Products Regulation, BPR, EU 528/2012) geeignet. Diese sind dem Fachmann bekannt. Wenn die erfindungsgemäß verwendeten technischen Zusammensetzungen weitere mikrobizide Wirkstoffe enthalten, treten beispielsweise bemerkenswerte weitere synergistische Wirkungssteigerungen auf.

Als f) funktionelle Additive sind geeignet: Komplexbildner (wie EDTA, NTA), Verdicker, Füllstoffe, Antioxidantien (wie Vitamin E, BHA und BHT), Alkalisierungsmittel wie NaOH, KOH, Alkalimetallcarbonat, Alkalimetallhydrogencarbonat, Ammoniak, niedermolekulare Amine oder Alkanolamine, Säuerungsmittel wie Carbonsäuren wie Essigsäure, bevorzugt Hydroxycarbonsäuren wie Milchsäure, Citronensäure, Puffer, Korrosionsinhibitoren (wie Benzotriazol), Netzmittel und Kältestabilisatoren. Weitere potentielle funktionelle Additive sind beispielsweise C₅-C₁₄-Alkylglycerinether, wie beispielsweise Sensiva^{®} SC 50 (1-(2-Ethylhexyl)glycerinether) und Phenylpropanole. Besonders bevorzugt ist Sensiva^{®} SC 50.

Bevorzugt sind die erfindungsgemäß verwendeten technischen Zusammensetzungen klar und homogen und liegen als Flüssigkeiten vor, vorzugsweise als wässrige Lösungen. Sie sind hinreichend farbstabil, kältestabil, lagerstabil und wirkstoffstabil.

Alternativ liegen die erfindungsgemäß verwendeten technischen Zusammensetzungen als niedrig- bis mittelviskose, fließfähige Gebrauchslösungen vor.

Der pH-Wert der erfindungsgemäß verwendeten technischen Zusammensetzungen liegt vorzugsweise im Bereich von 2 bis 14, bevorzugter 4 bis 12, insbesondere 6 bis 11, noch bevorzugter 8 bis 10.

Die erfindungsgemäß verwendeten technischen Zusammensetzungen haben in einer alternativen Ausführungsform einen pH-Wert von vorzugsweise 3 bis 10, wie etwa 3, wobei die Wirksamkeit voll vorhanden ist.

Im Zusammenhang mit dieser Erfindung ist eine technische Zusammensetzung normalerweise ein wasserbasiertes Produkt, das durch Rohre, Leitungen oder Anlagen gepumpt werden kann, wie beispielsweise Polymerdispersionen, Farben, Klebstoffe, Reinigungsprodukte, wie beispielsweise Waschmittel, Tenside, Polierflüssigkeiten, Spinnbäder, Kühlflüssigkeiten, Kühlschmierstoffe, Lederbehandlungszusammensetzungen, Silicon-Emulsionen und dergleichen. Die technische Zusammensetzung kann aber auch eine wässrige Lösung sein, die im Wesentlichen nur die Komponenten a), b) und c) und optional die Komponenten d), e) und f) enthält. Diese bedeutet, dass eine solche wässrige Lösung im Wesentlichen keine weiteren Bestandteile als Wasser, die Komponenten a), b) und c) und optional die Komponenten d), e) und f) enthält. Eine solche wässrige Lösung kann beispielsweise gezielt als Reinigungslösung für Rohre, Leitungen oder Anlagen verwendet werden. Bevorzugt ist die technische Zusammensetzung ausgewählt aus Polymerdispersionen, Farben, Klebstoffen, Reinigungsprodukten, wie beispielsweise Waschmitteln, Tensiden, Polierflüssigkeiten, Spinnbädern, Kühlflüssigkeiten, Kühlschmierstoffen, Lederbehandlungszusammensetzungen, Silicon-Emulsionen und dergleichen. Besonders bevorzugt ist die technische Zusammensetzung ausgewählt aus Reinigungsprodukten, wie beispielsweise Waschmitteln, Kühlflüssigkeiten und Kühlschmierstoffen.

Die erfindungsgemäß verwendete technische Zusammensetzung ist bevorzugt formaldehydfrei. Ebenso enthält die erfindungsgemäß verwendete technische Zusammensetzung bevorzugt auch keine formaldehyd-freisetzenden Substanzen und ist weiterhin frei von Methylisothiazolinon (MIT).

Die Erfindung betrifft in einem weiteren Aspekt ein nicht-therapeutisches Verfahren zum Ablösen von Biofilmen. Das erfindungsmäße Verfahren umfasst dabei das Behandeln eines mit einem Biofilm belegten Substratums mit einer technischen Zusammensetzung wie hierin beschrieben.

### BEISPIELE

Die Wirksamkeit von verschiedenen Biozidprodukten, Zusammensetzungen und Einzelsubstanzen gegenüber einem Pseudomonas aeruginosa Biofilm wurde getestet. Dabei wurde nach ASTM E2799-12 vorgegangen.

Zunächst wurde ein Biofilm auf Stiften in einer 96-Well-Platte (mit Stift-/Zapfen- bzw. Stöpseldeckel) mithilfe des MBEC^{™}-Assays hergestellt. Der Biofilm wurde dann den verschiedenen Biozidprodukten, Zusammensetzungen und Einzelsubstanzen über einen bestimmten Zeitraum bei Raumtemperatur ausgesetzt, und die Anzahl der überlebenden Zellen im Biofilm wurde durch Kultivierungsmessungen (log₁₀ - Reduktion (Log₁₀ reduction)) quantifiziert. Zusätzlich wurden OD (optische Dichte)-Messungen bei 620 nm zur qualitativen Wachstumsbestimmung durchgeführt. Die Anzahl der überlebenden Mikroorganismen wurde mit einer Kontrollprobe verglichen, in der der Biofilm lediglich Pufferwasser ausgesetzt wurde.

Die quantitative Analyse der erhaltenen Messdaten wurde unter Verwendung der Log₁₀ Reduktion durchgeführt. Hierbei wird die Keimanzahl des unbehandelten Biofilms (Referenzmessung, d.h. Messung der Probe, in der der Biofilm lediglich Pufferwasser ausgesetzt wurde) sowie der behandelten Probe als log₁₀ dargestellt und die Differenz wie folgt gebildet: Log₁₀ Reduktion = log₁₀ (unbehandelte Referenzprobe) - log₁₀ (behandelte Probe)

Wenn beispielsweise sämtliche Keime abgetötet werden, ist die Differenz (Reduktion) gleich dem Wert der Referenzmessung.

Folgende Experimentalbedingungen wurden angewendet:

| | | |
|---|---|---|
| Testorganismus: | Pseudomonas aeruginosa (ATCC 15442) | |
| Kontaktzeit (Zeitraum, die der Biofilm den Biozidprodukten bzw. Zusammensetzungen ausgesetzt wurde): | 30 min. | |
| Testtemperatur: | Raumtemperatur (20 ± 2)°C | |
| Inkubation (Zeitraum, in der der Biofilm gebildet wurde): | | (35 ± 2)°C über 24 Stunden |
| Konzentration Biozid bzw. Zusammensetzung: | | verschiedene Konzentrationen bis hin zu der höchsten vom Hersteller empfohlenen bzw. durch gesetzliche Vorgaben begrenzten Einsatzkonzentration. |
| Verdünnungsmedium: | gepuffertes Wasser (0,0425 KH₂PO₄/L destilliertes Wasser, filtersterilisiert und 0,405 g MgCl·6H₂O/L destilliertes Wasser; filtersterilisiert. | |
| Neutralisationsmittel: | Natriumthiosulfat | 5g/L |
| | Polysorbat 80 | 30g/L |
| | Saponin | 30g/L |
| | Lecithin | 3g/L |
| | Histidin | 1g/L |
| | Verdünnt in 0,25 mol Phosphatpuffer | |

OD-Messungen bei 620 nm.

Getestete Biozide, Zusammensetzungen und Einzelsubstanzen (im Folgenden auch allgemein "Muster"):
parmetol^{®} K40 (Vink Chemicals GmbH & Co. KG)
parmetol ^{®} MBX (Vink Chemicals GmbH & Co. KG)
parmetol ^{®} MBS (Vink Chemicals GmbH & Co. KG)
Phenoxyethanol + BDA (Vink Chemicals GmbH & Co. KG)
parmetol ^{®} BPX (Vink Chemicals GmbH & Co. KG)
grotanol^{®} FF 1N (Vink Chemicals GmbH & Co. KG)
grotanol ^{®} SR1 (Vink Chemicals GmbH & Co. KG)
Phenoxyethanol (Vink Chemicals GmbH & Co. KG)
Phenoxyethanol + 0,5 Gew.-% BDA
Phenoxyethanol + 1 Gew.-% BBIT (N-Butyl-1,2-Benzisothiazolin-3-on; Densil DN, bezogen von Lonza)
0,5 Gew.-% BDA (N,N-Bis(3-aminopropyl)dodecylamin; Lonzabac 12.100, bezogen von Lonza) in demineralisiertem Wasser
Propylenglykol (bezogen von Lanxess Distributions GmbH) + 1 Gew.-% BBIT
Propylenglykol + 0,5 Gew.-% BDA + 1 Gew.-% BBIT

### ERGEBNISSE

In der folgenden Tabelle 1 sind die Ergebnisse der Versuche zusammengefasst. Dabei werden in der ersten Spalte die jeweiligen Muster angegeben und in der zweiten Spalte die in den Mustern enthaltenen Substanzen identifiziert. In der dritten Spalte wird die maximale vom Hersteller empfohlene bzw. durch gesetzliche Vorgaben begrenzte maximale Einsatzkonzentration des jeweiligen Musters in Gew.-% angegeben. In der vierten Spalte wird die minimale Einsatzkonzentration des jeweiligen Musters, bei der es zu einer vollständigen Ablösung bzw. Abtötung des Biofilms nach einer halben Stunde Einwirkzeit kommt, angegeben (MBEC: minimum biofilm eradication concentration). Klare Mikro-Wells (OD₆₂₀ 0,1) zeigen eine vollständige Ablösung bzw. Abtötung an. In manchen Fällen konnte auch bei einer Einsatzkonzentration oberhalb der maximalen vom Hersteller empfohlenen bzw. durch gesetzliche Vorgaben begrenzten maximalen Einsatzkonzentration keine (vollständige) Ablösung des Biofilms beobachtet werden. Diese Werte sind mit einem Größerzeichen (>) versehen und zeigen an, dass die Einsatzkonzentration des jeweiligen Musters, bei der möglicherweise eine Ablösung des Biofilms beobachtet werden könnte, oberhalb dieses Wertes liegen muss.

**Tabelle 1:**

| Muster | Wirkstoffe | Maximale Einsatzkonzentration bzw. maximal empfohlene Einsatzkonzentrationen in Gew.-% | MBEC in %(w/w) bei 30 min Einwirkzeit |
|---|---|---|---|
| Systemreiniger auf Formaldehydbasis | | | |
| grotanol ^{®} SR1 | HPT, NaPy | 3,0 % | 2,0 % |

| Formaldehydfreie Systemreiniger | | | |
|---|---|---|---|
| grotanol ^{®} FF 1N | BIT, BDA, NaPy | 3,0 % | >3,0 % |

| Konventionelle Biozide | | | |
|---|---|---|---|
| parmetol^{®} MBS | | 0,4 % | > 0,5 % |
| parmetol^{®} MBX | | 0,4 % | > 0,5 % |
| parmetol^{®} K40 | | 0,2 % | > 0,59 % |
| grotan OX | | 0,2 % | > 0,2 % |

| Erfindungsgemäß verwendete Zusammensetzung und Vergleichsmuster | | | |
|---|---|---|---|
| parmetol^{®} BPX | | 1,0 % | 1,0 % |
| Phenoxyethanol + 0,5 Gew.-% BDA | | na* | 2,0 % |
| Phenoxyethanol + 1 Gew.-% BBIT | | na* | 2,0 % |
| Phenoxyethanol | | na* | 2,0 % |
| 0,5 Gew.-% BDA in H₂O | | na* | > 2,0 % |
| Propylenglykol + 1 Gew.-% BBIT | | na* | > 2,0 % |
| Propylenglykol + 0,5 Gew.-% BDA + 1 Gew.-% BBIT | | na* | > 2,0 % |

| | | | |
|---|---|---|---|
| HPT: alpha,alpha',alpha"-Trimethyl-1,3,5-triazin-1,3,5(2H,4H,6H)-triethanol NaPy: Pyridin-2-thiol-1-oxid, Natriumsalz BIT: 1,2-Benzisothiazol-3(2H)-on BDA: N,N-Bis(3-aminopropyl)dodecylamin MIT: 2-Methyl-2H-isothiazol-3-on CMI/MI: Gemisch aus 5-Chlor-2-methyl-2H-isothiazol-3-on und 2-Methyl-2H-isothiazol-3-on MBO: Reaktionsprodukt aus Paraformaldehyd und 2-Hydroxypropylamin (Verhältnis 3:2) BBIT: N-Butyl-1,2-Benzisothiazolin-3-on na* Diese Mischungen dienen nur als Referenz und werden nicht kommerziell vertrieben. Daher sind für diese Mischungen keine maximalen Einsatzkonzentration bzw. maximal empfohlene Einsatzkonzentrationen verfügbar. | | | |

Die Ergebnisse zeigen, dass durch die Verwendung von parmetol^{®} BPX eine vollständige Ablösung des Biofilms bereits nach einer halben Stunde Einwirkzeit bei einer Einsatzkonzentration von nur 1 Gew.-% erzielt werden kann. Die Einsatzmenge von 1 Gew.-% entspricht dabei der vom Hersteller empfohlenen maximalen Einsatzkonzentration. Von allen anderen getesteten Systemreinigern und konventionellen Bioziden ist lediglich das formaldehydhaltige grotanol ^{®} SR1 in der Lage, in einer Menge unterhalb der empfohlenen maximalen Einsatzkonzentration zu einer vollständigen Ablösung des Biofilms zu führen. Allerdings wird hierzu mit 2 Gew.-% eine doppelt so große Menge wie von parmetol^{®} BPX benötigt.

Weiterhin belegen die Versuche mit den in parmetol^{®} BPX enthaltenen Einzelsubstanzen BDA und Phenoxyethanol sowie die Versuche mit den Zweierkombination der in parmetol^{®} BPX enthaltenen Einzelsubstanzen Phenoxyethanol und BDA sowie Phenoxyethanol und BBIT, dass die erfindungsgemäß verwendete Dreierkombination in der Tat einen unerwarteten Synergismus zeigt, der so aus den Wirkungen der Einzelsubstanzen bzw. der Zweierkombinationen nicht vorhersehbar war. Alle diese Einzelsubstanzen zeigen entweder faktisch keine biofilmlösende Wirkung (beispielsweise für BDA alleine) oder nur in wesentlich höherer Einsatzkonzentration (beispielsweise für Phenoxyethanol und die Phenoxyethanol-haltigen Zweierkombinationen mit 2 Gew.-%). Dieser unerwartete Synergismus wird weiter bestätigt durch die Versuche, in denen Propylenglykol (statt Phenoxyethanol) verwendet wurde. Auch für diese Kombinationen zeigte sich auch bei einer Einsatzkonzentration von 2 Gew.-% überhaupt keine Ablösung des Biofilms.

## Patentansprüche

1. Nicht-therapeutische Verwendung einer technischen Zusammensetzung umfassend
a) mindestens eines von Phenoxyethanol, Benzylalkohol, Phenoxypropanol und Phenethylalkohol,
b) mindestens eines von 1,2-Benzisothiazolin-3-on und dessen Derivaten gemäß Formel (I): 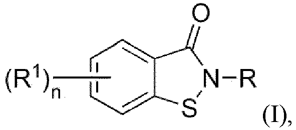 in der R gleich H oder C₁- bis C₁₀-Alkyl ist, R¹ gleich Hydroxy, Halogen, C₁- bis C₁₀-Alkyl oder C₁- bis C₁₀-Alkoxy ist und n gleich 0 bis 4 ist; und wenn mehrere Reste R¹ vorhanden sind, sie gleich oder verschieden sein können, und
c) ein organisches Amin mit einer Alkylgruppe mit mindestens 8 Kohlenstoffatomen
zum Ablösen von Biofilmen,
wobei die Komponente c) ausgewählt ist aus N-Dodecylpropan-1,3-diamin und Aminen der Formel II 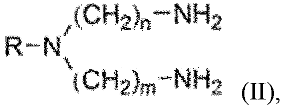
in der R ein geradkettiger oder verzweigtkettiger Alkyl- oder Alkylenrest mit 8 bis 22 Kohlenstoffatomen ist, und n + m = 2 bis 12.

2. Verwendung nach Anspruch 1, wobei die Komponente a) mindestens eines von Phenoxyethanol und Phenoxypropanol ist und bevorzugt Phenoxyethanol ist.

3. Verwendung nach Anspruch 1 oder 2, wobei die Komponente b) ein Alkyl-1,2-benzisothiazolin-3-on und bevorzugt N-butyl-1,2-benzisothiazolin-3-on ist.

4. Verwendung nach einem der vorherigen Ansprüche, wobei das Amin ausgewählt ist aus N-Dodecylpropan-1,3-diamin und N,N-Bis(3-aminopropyl)dodecylamin und bevorzugt N,N-Bis(3-aminopropyl)dodecylamin ist.

5. Verwendung nach einem der vorherigen Ansprüche, wobei in der Zusammensetzung das Gewichtsverhältnis von Komponente b) zu Komponente a) (b/a) größer oder gleich (≥) 10⁻³ und kleiner oder gleich 10⁻¹ ist, und das Gewichtsverhältnis von Komponente c) zu Komponente a) (c/a) größer oder gleich 5 × 10⁻⁴ und kleiner oder gleich 6 × 10⁻² ist.

6. Verwendung nach einem der vorherigen Ansprüche, wobei in der Zusammensetzung das Gewichtsverhältnis (b/a) größer oder gleich 5 × 10⁻³ und kleiner oder gleich 5 × 10⁻² ist und das Gewichtsverhältnis (c/a) größer oder gleich 10⁻³ und kleiner oder gleich 10⁻² ist.

7. Verwendung nach einem der vorherigen Ansprüche, wobei in der Zusammensetzung das Gewichtsverhältnis (b/a) größer oder gleich 8 × 10⁻³ und kleiner oder gleich 1,5 × 10⁻² und das Gewichtsverhältnis (c/a) größer oder gleich 2,5 × 10⁻³ und kleiner oder gleich 6 × 10⁻³ ist.

8. Verwendung nach einem der vorherigen Ansprüche, wobei in der Zusammensetzung die Komponenten a), b) und c) zusammen in einer Menge von 0,01 bis 10,00 Gew.-%, bevorzugt von 0,01 bis 5,00 Gew.-%, bevorzugter von 0,01 bis 2,00 Gew.-%, bezogen auf das Gesamtgewicht der technischen Zusammensetzung, enthalten sind.

9. Verwendung nach einem der vorherigen Ansprüche, wobei in der Zusammensetzung die Menge der Komponente a), ausgedrückt in Gewichtsprozent der Zusammensetzung, 0,0935% bis 1,491% und bevorzugt 0,935% bis 0,994% beträgt.

10. Verwendung nach einem der vorherigen Ansprüche, wobei in der Zusammensetzung die Menge der Komponente b), ausgedrückt in Gewichtsprozent der Zusammensetzung, 0,005% bis 0,075% 0 und bevorzugt 0,005% bis 0,05% beträgt.

11. Verwendung nach einem der vorherigen Ansprüche, wobei in der Zusammensetzung die Menge der Komponente c), ausgedrückt in Gewichtsprozent der Zusammensetzung, 0,0001% bis 0,0225% und bevorzugt 0,001% bis 0,015% beträgt.

12. Verwendung nach einem der vorherigen Ansprüche, wobei die Zusammensetzung formaldehydfrei ist.

13. Nicht-therapeutisches Verfahren zum Ablösen von Biofilmen, umfassend das Behandeln eines mit einem Biofilm belegten Substratums mit einer technischen Zusammensetzung wie in einem der Ansprüche 1 bis 12 definiert.

## Claims

1. Non-therapeutic use of a technical composition comprising
a) at least one of phenoxyethanol, benzyl alcohol, phenoxypropanol, and phenethyl alcohol,
b) at least one of 1,2-benzisothiazolin-3-one and its derivatives according to formula (I): 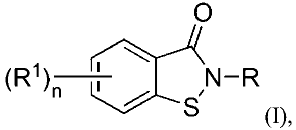 wherein R is H or C₁-C₁₀-alkyl, R¹ is hydroxy, halogen, C₁-C₁₀-alkyl or C₁-C₁₀-alkoxy, and n is 0 to 4; and if several residues R¹ are present, they may be the same or different, and
c) an organic amine with an alkyl group having at least 8 carbon atoms
for removing biofilms,
wherein component c) is selected from N-dodecylpropane-1,3-diamine and amines of formula II 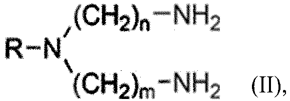
wherein R is a straight-chain or branched-chain alkyl or alkylene residue having 8 to 22 carbon atoms, and n + m = 2 to 12.

2. Use according to claim 1, wherein component a) is at least one of phenoxyethanol and phenoxypropanol and is preferably phenoxyethanol.

3. Use according to claim 1 or 2, wherein component b) is an alkyl-1,2-benzisothiazolin-3-one and is preferably N-butyl-1,2-benzisothiazolin-3-one.

4. Use according to anyone of the preceding claims, wherein the amine is selected from N-dodecylpropane-1,3-diamine and N,N-bis(3-aminopropyl)dodecylamine and is preferably N,N-bis(3-aminopropyl)dodecylamine.

5. Use according to anyone of the preceding claims, wherein in the composition the weight ratio of component b) to component a) (b/a) is greater than or equal to (≥) 10⁻³ and less than or equal to 10⁻¹, and the weight ratio of component c) to component a) (c/a) is greater than or equal to 5 x 10⁻⁴ and less than or equal to 6 x 10⁻².

6. Use according to anyone of the preceding claims, wherein in the composition the weight ratio (b/a) is greater than or equal to 5 x 10⁻³ and less than or equal to 5 x 10⁻² and the weight ratio (c/a) is greater than or equal to 10⁻³ and less than or equal to 10⁻².

7. Use according to anyone of the preceding claims, wherein in the composition the weight ratio (b/a) is greater than or equal to 8 x 10⁻³ and less than or equal to 1.5 x 10⁻² and the weight ratio (c/a) is greater than or equal to 2.5 x 10⁻³ and less than or equal to 6 x 10⁻³.

8. Use according to anyone of the preceding claims, wherein in the composition the components a), b) and c) are contained together in an amount of 0.01 to 10.00% by weight, preferably 0.01 to 5.00% by weight, more preferably 0.01 to 2.00% by weight, based on the total weight of the technical composition.

9. Use according to anyone of the preceding claims, wherein in the composition the amount of component a), expressed as a weight percent of the composition, is 0.0935% to 1.491% and preferably 0.935% to 0.994%.

10. Use according to anyone of the preceding claims, wherein in the composition the amount of component b), expressed as a weight percent of the composition, is 0.005% to 0.075% and preferably 0.005% to 0.05%.

11. Use according to anyone of the preceding claims, wherein in the composition the amount of component c), expressed as a weight percent of the composition, is 0.0001% to 0.0225% and preferably 0.001% to 0.015%.

12. Use according to anyone of the preceding claims, wherein the composition is formaldehyde-free.

13. Non-therapeutic method for removing biofilms, comprising treating a substrate covered with a biofilm with a technical composition as defined in anyone of claims 1 to 12.

## Revendications

1. Utilisation non-thérapeutique d'une composition technique comprenant
a) au moins un parmi le phénoxyéthanol, l'alcool benzylique, le phénoxypropanol et l'alcool phénéthylique,
b) au moins un parmi la 1,2-benzisothiazolin-3-one et ses dérivés selon la formule (I) : 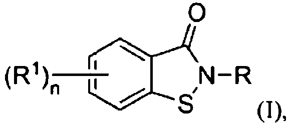 dans laquelle R représente H ou alkyle en C₁ à C₁₀, R¹ représente hydroxy, halogène, alkyle en C₁ à C₁₀ ou alcoxy en C₁ à C₁₀, et n est égal à 0 à 4 ; et si plusieurs radicaux R¹ sont présents, ils peuvent être de nature identique ou différente, et
c) une amine organique comportant un groupe alkyle renfermant au moins 8 atomes de carbone,
pour détacher des biofilms,
la composante c) étant choisie parmi la N-dodécylpropan-1,3-diamine et les amines répondant à la formule II 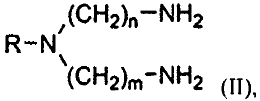
dans laquelle R représente un radical alkyle ou alkylène linéaire ou ramifié renfermant 8 à 22 atomes de carbone, et n + m étant compris entre 2 et 12.

2. Utilisation selon la revendication 1, la composante a) étant au moins un parmi le phénoxyéthanol et le phénoxypropanol, s'agissant préférentiellement de phénoxyéthanol.

3. Utilisation selon les revendications 1 ou 2, la composante b) étant une alkyl-1,2-benzisothiazolin-3-one, s'agissant préférentiellement de N-butyl-1,2-benzisothiazolin-3-one.

4. Utilisation selon l'une des revendications précédentes, l'amine étant choisie parmi la N-dodécylpropan-1,3-diamine et la N,N-bis-(3-aminopropyl)dodécylamine, s'agissant préférentiellement de la N,N-bis-(3-aminopropyl)dodécylamine.

5. Utilisation selon l'une des revendications précédentes, le rapport pondéral au sein de la composition entre la composante b) et la composante a) (b/a) étant supérieur ou égal à (≥) 10⁻³ et inférieur ou égal à 10⁻¹, et le rapport pondéral entre la composante c) et la composante a) (c/a) étant supérieur ou égal à 5 x 10⁻⁴ et inférieur ou égal à 6 x 10⁻².

6. Utilisation selon l'une des revendications précédentes, le rapport pondéral (b/a) au sein de la composition étant supérieur ou égal à 5 x 10⁻³ et inférieur ou égal à 5 x 10⁻², et le rapport pondéral (c/a) étant supérieur ou égal à 10⁻³ et inférieur ou égal à 10⁻².

7. Utilisation selon l'une des revendications précédentes, le rapport pondéral (b/a) au sein de la composition étant supérieur ou égal à 8 x 10⁻³ et inférieur ou égal à 1,5 x 10⁻², et le rapport pondéral (c/a) étant supérieur ou égal à 2,5 x 10⁻³ et inférieur ou égal à 6 x 10⁻³.

8. Utilisation selon l'une des revendications précédentes, la composition contenant l'ensemble des composantes a), b) et c) dans une quantité comprise entre 0,01 et 10,00 % en poids, de préférence entre 0,01 et 5,00 % en poids, plus préférentiellement entre 0,01 et 2,00 % en poids, par rapport au poids total de la composition technique.

9. Utilisation selon l'une des revendications précédentes, la composition contenant la composante a) dans une quantité, exprimée en pourcentage pondéral de la composition, comprise entre 0,0935 % et 1,491 %, et de préférence entre 0,935 % et 0,994 %.

10. Utilisation selon l'une des revendications précédentes, la composition contenant la composante b) dans une quantité, exprimée en pourcentage pondéral de la composition, comprise entre 0,005 % et 0,075 %, et de préférence entre 0,005 % et 0,05 %.

11. Utilisation selon l'une des revendications précédentes, la composition contenant la composante c) dans une quantité, exprimée en pourcentage pondéral de la composition, comprise entre 0,0001 % et 0,0225 %, et de préférence entre 0,001 % et 0,015 %.

12. Utilisation selon l'une des revendications précédentes, la composition étant exempte de formaldéhyde.

13. Procédé non-thérapeutique visant à détacher des biofilms, comprenant le traitement d'un substrat recouvert d'un biofilm avec une composition technique tel que définie dans l'une des revendications 1 à 12.
